# EUROPÄISCHE PATENTANMELDUNG

(11) **EP 0 839 774 A1**
(43) Veröffentlichungstag der Anmeldung: **06.05.1998**
(21) Anmeldenummer: 97119004.6
(22) Anmeldetag: 31.10.1997
(51) Int. Cl.: C04B 28/02, C04B 14/12

(54) **Leichtmauermörtel der Klasse LM 21**

(30) Priorität: 02.11.1996 DE 19645231
(71) Anmelder: DENNERT PORAVER GmbH, 96132 Schlüsselfeld (DE)
(72) Erfinder: Pruzina, Christoph, Dipl.-Ing., 65396 Walluf (DE)
(74) Vertreter: Hübner, Gerd, Dipl.-Phys.

(57) **Zusammenfassung**

Ein Leichtmauermörtel mindestens der Klasse LM 21 insbesondere als Werk-Trockenmörtel oder als pumpfähiger Werk-Trockenmörtel weist bezogen auf die Gesamt-Trockenmenge folgende Mindest-Zusammensetzung auf:
- hydraulisch erhärtendes Bindemittel in Form von Zement mit 30 bis 75 Masse%, vorzugsweise 30 bis 50 Masse%,
- eine hydraulische oder latent hydraulisch erhärtende Bindungskomponente mit 5 bis 15 Masse%,
- Leichtzuschlagstoff in Form von Blähton-Rundgranulat mit 5 bis 60 Masse%, vorzugsweise 40 bis 60 Masse%,
- Leichtzuschlagstoff in Form von Schaumglasgranulat mit 4 bis 20 Masse%, vorzugsweise bis 15 Masse%,
- Celluloseether mit 0,01 bis 0,5 Masse%, und
- Luftporenbildner mit 0,001 bis 1,0 Masse%.

## Beschreibung

Die Erfindung betrifft einen Leichtmauermörtel mindestens der Klasse LM 21 insbesondere als Werk-Frischmörtel oder als nach Anmachen pumpfähiger Werk-Trockenmörtel.

Zum Hintergrund der vorliegenden Erfindung ist festzuhalten, daß im Zuge der seit 01.01.1995 in der Bundesrepublik Deutschland geltenden 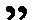 Verordnung über einen energiesparenden Wärmeschutz bei Gebäuden" (= Wärmeschutzverordnung) bei Gebäuden mit normalen Innentemperaturen, also Wohngebäuden, Büro- und Verwaltungsgebäuden usw., der Wärmedurchgangskoeffizient der Außenwände maximal 0,50 W/(m²K) betragen darf. Aufgrund dieser Beschränkung gewinnt beim Mauerwerk der Außenwand das Wärmeleitverhalten der Mörtelschichten zwischen den Mauersteinen eine zunehmende Bedeutung. Um hier einen möglichst guten Wärmeschutz zu erreichen, kann einerseits die materialbedingte Wärmeleitfähigkeit des Mörtels und andererseits der Wärmeleitquerschnitt der Mörtelfugen, also praktisch deren Auftragsdicke, verringert werden.

Zur Verringerung der Wärmeleitfähigkeit des Mörtels wurden Leichtmauermörtel entwickelt, die aufgrund wärmedämmender Zuschlagstoffe z. B. in Form von Schaumglasgranulat gute Wärmedämmeigenschaften aufweisen. Nach DIN 1053 Teil 1 weist ein Leichtmauermörtel der Klasse LM 36 eine Wärmeleitfähigkeit ≤ 0,27 W/(mK) auf. Die maximale Trockenrohdichte eines solchen Mörtels darf 1,0 kg/dm³ nicht überschreiten. Ist dies der Fall, gilt die vorgenannte Anforderung an die Maximalwärmeleitfähigkeit des Mörtels ohne weiteren Nachweis als erfüllt.

Nach der DIN 1053 Teil 1 ist ferner ein Leichtmauermörtel der Klasse LM 21 spezifiziert, dessen maximale Wärmeleitfähigkeit bei 0,18 W/(mK) liegt. Die entsprechende maximale Trockenrohdichte beträgt 0,7 kg/dm³.

Ein derartiger Leichtmauermörtel der Klasse LM 21 ist aus der DE 295 05 781 Ul bekannt, wobei als Zuschlag ausschließlich ein feinporiges Rundgranulat aus Glas verwendet wird. Ferner ist ein Zusatzmittel vorgesehen, welches aus einem Stabilisator, einem Schaumpromotor und einem Mörtelverzögerer besteht. Das Mischungsverhältnis aus Zement, Zuschlagstoff und Zusatzmittel soll 1 : 3,5 : 2,5 betragen.

Dieser bekannte Leichtmauermörtel der Klasse LM 21 ist laut der vorgenannten Druckschrift im Werk herzustellen und mit einem Transportbetonmischer zur Baustelle zu befördern, wo er in Mörtelkübeln zur Verarbeitung kellenfertig bereitgestellt werden kann. Nach DIN 1053 Teil 1, Anhang A.4.2 handelt es sich also um einen Werk-Frischmörtel.

Zu der eingangs erwähnten Verbesserung der Wärmedämmeigenschaften der Mörtelfugen ist es aus der EP 0 639 679 A2 bekannt, neben einem Leichtmörtel LM 21 in Normalfugendicke einen Dünnbettmörtel oder einen Mittelbettmörtel zu verwenden. Die Fugendicke beim Dünnbettmörtel beträgt in der Regel 1 bis 2 mm, wodurch an die Planizität der Mauersteine höchste Anforderungen zu stellen sind. Letztere sind daher nach dem eigentlichen Herstellungsvorgang mit einer Toleranz von weniger als 1 mm bezüglich ihrer Auflageflächen plan zu schleifen. Derartig aufwendig bearbeitete Mauersteine verteuern das Mauerwerk erheblich, weswegen die Dünnbettmörteltechnik aus ökonomischen Gründen nicht das Mittel der Wahl zur Verbesserung der Wärmedämmeigenschaften des Mauerwerks darstellt.

Im Zusammenhang mit dem in der EP 0 639 679 Al angegebenen Mauerwerk in Mittelbettmörtelausführung, bei dem die Fugendicke ca. 6 mm beträgt, wird ohne nähere Spezifizierung ein Werktrockenmörtel der Klasse LM 36 nach DIN 1053 angegeben. Damit lassen sich einerseits die geschilderten Nachteile der Dünnbettmörteltechnik vermeiden, andererseits wird gegenüber einem Normalmörtelbett mit einer Fugendicke von ca. 12 mm ein erheblich verringerter Wärmeleitquerschnitt bei der Fuge erreicht. In Verbindung mit der Verwendung eines Leichtmörtels der Klasse LM 36, der als Wärmedämm-Mörtel einzustufen ist, wird also eine vorteilhafte Verbesserung der Wärmedämmfähigkeit des in der geschilderten Technik hergestellten Mauerwerkes erzielt.

Neben den durch die besagte Wärmeschutzverordnung einfließenden ökologischen Gesichtspunkten sind im Bauwesen grundsätzlich auch ökonomische Aspekte zu beachten und einschlägige Anforderungen an die Verarbeitbarkeit des Mörtels zu stellen. Diese verschiedenen Einflußgrößen wechselwirken miteinander, so daß beispielsweise die Wärmedämmfähigkeit des Mörtels nicht ins Extreme etwa durch Zugabe einer sehr großen Menge von Leichtzuschlag gesteigert werden kann, ohne damit andere Anforderungen an den Mörtel unerfüllbar zu machen. So wird beispielsweise die Festigkeit des Mörtels durch eine übermäßige Zugabe eines Leichtzuschlagstoffes unter das DIN-gerechte Maß abgesenkt, was grundsätzlich nicht zulässig ist.

Die vorstehend angesprochenen ökonomischen Aspekte bedingen beispielsweise ein möglichst rationelles Herstellen und Aufbringen des Mörtels. In dieser Hinsicht geht die Tendenz nachhaltig zum Anmischen eines Mörtels an der Baustelle durch Zusetzen von Wasser zu einem industriell hergestellten Werk-Trockenmörtel mit einer anschließenden Pumpförderung des auf verarbeitungsfertige Konsistenz eingestellten Mörtels zum jeweiligen Verarbeitungsort in einem Gebäude. Dort wird der Mörtel mittels einer Breitschlitzdüse auf die vorher gemauerte Steinlage aufgebracht.

Unter Zusammenfassung der vorstehend erörterten wärmedämmtechnischen, ökonomischen und verarbeitungsstechnischen Aspekte ist also einerseits ein Mörtel anzustreben, der als Werk-Trockenmörtel industriell vorfertigbar, anschließend an der Baustelle durch Zugabe von Wasser auf Verarbeitungskonsistenz einstellbar und schließlich pumpfähig ist. Ferner soll der Mörtel vorzugsweise in Mittelbett-Technik durch einen Düsenauftrag auf das Mauerwerk aufgebracht werden können, um einerseits herkömmlich spezifizierte Mauersteine verwenden zu können, andererseits jedoch einen weiteren Beitrag zur Verminderung der Wärmeleitfähigkeit der Mörtelfuge zu leisten.

Wie problematisch die gleichzeitige Erfüllung der vorstehenden Anforderungen ist, soll anhand einiger Wechselwirkungsmechanismen bei der Verarbeitung eines solchen Mörtels erläutert werden:
- Damit der Mörtel über längere Strecken bis zu z.B. 40 m pumpbar bleibt, darf der Mörtel nicht zu dickflüssig eingestellt sein. Wird er in diesem Zusammenhang zu dünnflüssig eingestellt, so hat er jedoch im Auftragszustand nicht die notwendige Standfestigkeit, um nicht in das Lochbild der Mauersteine zu fallen. Die rheologischen Eigenschaften des Mörtels müssen also stimmen.
- Der Pumpendruck kann zum Fördern schwer pumpbarer Mörtel nicht beliebig erhöht werden, da dadurch die druckempfindlichen (da porösen) Leichtzuschlagstoffe zerstört werden könnten. Durch den Zusammenbruch der porösen Struktur der Leichtzuschlagstoffe erhöht sich dabei die Trockenrohdichte des Mörtels, so daß die für einen Mörtel z.B. der Klasse LM 21 geforderte Trockenrohdichte von maximal 0,7 kg/dm³ überschritten werden kann.
- Eine übermäßige Erhöhung des Pumpendruckes ist auch im Zusammenhang mit üblichen Leichtzuschlagstoffen, wie Blähschiefer oder Bims nicht möglich. Diese Leichtzuschlagstoffe sind nämlich offenporig, so daß sich bei einem erhöhten Pumpendruck das Anmachwasser des Mörtels in die Poren drückt. Der Mörtel wird dadurch steifer und könnte letztendes seine Pumpfähigkeit verlieren. Mit den erwähnten Leichtzuschlagstoffen hat es sich zudem grundsätzlich als schwierig erwiesen, eine Trockenrohdichte des Mörtels unter 0,8 kg/dm³ bei gleichzeitig ausreichendem Festigkeitsniveau zu erreichen.

Auch wenn in den vorstehenden Abhandlungen ein durch Zugabe von Wasser pumpfähig aufbereitbarer Werk-Trockenmörtel im Vordergrund stand, so darf für die praktischeAnwendung eine Werk-Frischmörtel der Klasse LM 21 nicht aus den Augen verloren werden. Solche Werk-Frischmörtel, die im Mörtel- oder Betonwerk hergestellt, dann mit einem Beton- oder Mörtelwagen an die Baustelle transportiert, dort in bereitgestellte Container abgeladen und schließlich in der Regel von Hand verarbeitet werden, bleiben für kleinere und mittelgroße Baustellen sicherlich interessant.

Ausgehend von der geschilderten Problematik liegt nun der Erfindung die Aufgabe zugrunde, eine Grundrezeptur für einen Leichtmauermörtel mindestens der Klasse LM 21 anzugeben, auf deren Basis sowohl ein Frisch-Mörtel als auch nach Anmachen pumpfähiger Werk-Trockenmörtel mit verbesserter Verarbeitbarkeit, Festigkeit und Wärmedammfähigkeit herstellbar ist. Unter 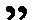 mindestens der Klasse LM 21 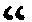 ist dabei zu verstehen, daß der Leichtmauermörtel diese durch einschlägige DIN-Normen spezifizierte Wärmedämmfähigkeit bei vorgeschriebener Festigkeit erreicht, wobei jedoch nicht ausgeschlossen werden soll, daß auf der Basis der angegebenen Grundrezeptur auch ein noch besser dämmfähiger Leichtmauermörtel etwa der noch nicht offiziell spezifizierten Klasse LM 18 hergestellt werden kann.

Die obengenannte Aufgabe wird durch die im Anspruch 1 angegebene Grundrezeptur gelöst, die sowohl für Werk-Frischmörtel als auch nach Anmachen pumpfähigen Werk-Trockenmörtel gelten soll. Unter Grundrezeptur ist dabei zu verstehen, daß weitere Rezepturbestandteile eingesetzt werden, die einer Optimierung und Anpassung des jeweiligen Leichtmauermörtels an seine Verarbeitung und praktisch geforderten Eigenschaften dienen.

Der erfindungsgemäße Leichtmauermörtel setzt sich demnach zusammen aus (die Angabe der Masse% bezieht sich auf die Gesamt-Trockenmenge des Mörtels):
- hydraulisch erhärtendem Bindemittel in Form von Zement mit 30 bis 75 Masse%, vorzugsweise 30 bis 50 Masse%,
- einer hydraulischen oder latent hydraulisch erhärtenden Bindungskomponente mit 5 bis 15 Masse%,
- Leichtzuschlagstoff in Form von Blähton-Rundgranulat mit 5 bis 60 Masse%, vorzugsweise 40 bis 60 Masse%,
- Leichtzuschlagstoff in Form von Schaumglasgranulat mit 4 bis 20 Masse%, vorzugsweise bis 15 Masse%,
- Celluloseether mit 0,01 bis 0,5 Masse%, und
- Luftporenbildner mit 0,001 bis 1,0 Masse%.

Neben dem hydraulisch erhärtenden Bindemittel in Form von Zement, das für die Grundfestigkeit des ausgehärteten Mörtels sorgt, und der damit zusammenwirkenden - je nach Anwendungszweck - hydraulischen oder latent hydraulisch erhärtenden Bindungskomponente (die im folgenden noch näher erörtert wird), ist in erster Linie der Leichtzuschlagstoff in Form von Blähton-Rundgranulat die entscheidende Komponente der Rezeptur. Dieses sehr feste Blähton-Rundgranulat wird auf der Basis spezieller Tonarten hergestellt, die bei einer Temperatur von ca. 1150°C in Drehrohröfen aufgebläht werden. Dabei wird der Ton zu Blähton-Kügelchen umgeformt, die im Inneren unzählige Luftporen enthalten und eine feste keramische Oberfläche aufweisen. Der Herstellungsprozess ist dabei so ausgelegt, daß die Größe der Blähton-Kügelchen innerhalb des in Anspruch 2 angegebenen Korngrößenbereichs bleibt. Insofern muß dieses Blähton-Granulat nicht eigens gebrochen werden, um den Korngrößenbereich zu erreichen, wie dies bei dem bisher oftmals als Leichtzuschlagstoff eingesetzten, gebrochenen Blähton-Granulat der Fall ist. Beim Brechen eines größeren Granulates wird dessen relativ feste Hülle zerstört, was die Eigenfestigkeit erheblich reduziert. Ferner ist die Eigenfestigkeit von größeren Blähton-Granulatteilchen von Hause aus geringer als die kleinerer Partikel.

Das erfindungsgemäß vorgesehene Blähton-Rundgranulat weist demgegenüber eine intakte Hülle auf, die zusammen mit der an sich bereits größeren Eigenfestigkeit von kleineren Granulatpartikeln für die hohe Eigenfestigkeit dieses Leichtzuschlages verantwortlich ist. Eigenfestigkeit und geringe Schüttdichte des Leichtzuschlages beeinflussen den erfindungsgemäßen Leichtmauermörtel in der gemäß der Erfindungsaufgabe vorgesehenen Richtung.

Im übrigen ist zu der Mindestzusammensetzung nach Anspruch 1 darauf hinzuweisen, daß je nach Bedarfsfall die hydraulische oder latent hydraulisch erhärtende Bindungskomponente auch teilweise oder vollständig durch Zement substituiert werden kann, um einen Leichtmauermörtel gemäß der Erfindung herzustellen.

Ferner ist zum Bestandteil Celluloseether festzuhalten, daß dieser zur Einstellung des Wasserrückhaltevermögens, der Plastizität und Geschmeidigkeit des angemachten Mörtels dient und die innere Kohäsion des Mörtels sicherstellt, so daß dieser nicht beim Verarbeiten auseinanderfällt. Zu diesem Zweck ist derzeit Celluloseether das Mittel der Wahl, jedoch kann mit entsprechenden Austauschstoffen dieselbe Funktion erfüllt werden.

In den Unteransprüchen 3 bis 13 sind weitere Rezepturbestandteile angegeben, wie sie für die Auslegung des erfindungsgemäßen Leichtmauermörtels als nach Anmachen pumpfähiger Werk-Trockenmörtel verwendet werden.

Wie Tests ergeben haben, ist ein Leichtmauermörtel auf der Basis dieser Rezepturbestandteile als Werk-Trockenmörtel herstellbar, an der Baustelle anmachbar und mit Pumpendrücken in der Größenordnung bis zu etwa 13 bar über eine Förderstrecke von bis zu 40 m pumpbar. Dabei erfüllt er hinsichtlich Trockenrohdichte und Wärmeleitfähigkeit die Anforderungen an einen Leichtmauermörtel der Klasse LM 21.

Die einzelnen, in den Ansprüchen 3 bis 13 angegebenen Komponenten tragen dabei wie folgt zu den positiven Eigenschaften des erfindungsgemäßen Mörtels bei:
- Es muß nicht vertieft erörtert werden, daß der hydraulisch erhärtende Zement als Bindemittel für die Grundfestigkeit des ausgehärteten Mörtels dient.
- Kalkhydrat als hydraulisches Bindemittel - also Bindemittel, das in Anwesenheit von Wasser und Luft abbindet - dient aufgrund seiner in der Anmach- und Verarbeitungsphase gleichbleibenden Konsistenz zusätzlich als Gleitmittel und Wassertransportmittel. Damit wird die Pumpfähigkeit des Mörtels positiv beeinflußt.
- Blähton- und Schaumglasgranulat als Leichtzuschlagstoffe dienen zur Wärmedämmung. Im Zusammenhang mit der Pumpfähigkeit des erfindungsgemäßen Mörtels ist die Verwendung dieser Granulate anstatt der eingangs genannten anderen Leichtzuschlagstoffe vorteilhaft, da diese-Materialien geschlossenporig und insbesondere in einem Korngrößenbereich bis 2 mm eine hohe Hüllenstabilität aufweist. Durch die Geschlossenporigkeit kann das Anmachwasser des Mörtels auch unter Einfluß des Förderdruckes der Pumpe nicht in die Poren eindringen, wodurch die Konsistenz des Mörtels auch unter diesem Einfluß erhalten bleibt. Aufgrund der hohen Hüllenstabilität bleibt zudem die Granulatstrukur des Materials erhalten. Es tritt kein nennenswerter Zerkleinerungseffekt beim Fördern des Mörtels auf, wodurch die spezifizierte Trockenrohdichte des Mörtels zuverlässig erreicht wird.
- Der Celluloseether, insbesondere in niedrig- und mittelviskoser Einstellung, dient aufgrund seiner wasserbindenden Wirkung ebenfalls als Gleitmittel und zusätzlich als Mörtelverzögerer.
- Schließlich erniedrigt der weiterhin vorgesehene Luftporenbildner die Oberflächenspannung der Mörtelbestandteile und wirkt somit positiv auf die Fließfähigkeit des Mörtels beim Pumpen. Zusätzlich wird durch die Einführung von Luftporen in den Mörtel dessen Trockenrohdichte erniedrigt und das Wärmedämmverhalten verbessert.

Nach Anspruch 4 wird in die Mörtel-Rezeptur zusätzlich geblähtes Perlit-Granulat eingemischt. Das geblähte Perlit-Granulat stellt dabei ebenfalls einen Leichtzuschlagstoff zur Verbesserung der Wärmedämmfähigkeit des Mörtels dar. Seine Hauptfunktion ist jedoch die eines Wasserspeichers für den Pumpvorgang. Perlit-Granulat ist nämlich offenporig mit der Spezialität, daß sich die Poren drucklos beim Anmachen des Mörtels mit Wasser vollsaugen. Wird der Mörtel zum Pumpen nun mit dem Förderdruck beaufschlagt, so gibt das Perlit-Granulat Wasser ab und erhöht so die Fließfähig keit des Mörtels.

Weiterhin dient das Perlit-Granulat aufgrund seiner inneren Struktur als zusätzliches Gleitmittel. Perlit-Granulat ist nämlich ein Schichtsilikat, das gewissermaßen "innere Gleitebenen" aufweist, die für die Verbesserung des Gleitvermögens sorgen.

Gemäß Anspruch 5 ist ein Blähglimmer-Granulat als weiterer Bestandteil des Mörtels vorgesehen, der ähnliche Eigenschaften wie der Perlit-Anteil aufweist.

Der gemäß den Ansprüchen 6 und 7 vorgesehene porige Zuschlag nach DIN 4226, Teil 2 dient als Stützkorn für den pumpfähigen Mörtel zur Sicherstellung der zur Ausbildung eines Mittelbettes notwendigen Auftragsschichtdicke.

Gemäß den Ansprüchen 8 und 9 ist ein Zuschlag nach DIN 4226, Teil 1 vorgesehen, bei dem es sich beispielsweise um Quarzmehl, Quarzsand, Kalksteinsplit oder Kalksteinmehl - also nichtporige Zuschläge - handelt. Dieser Rezepturbestandteil dient teils als Füllstoff, teils zur Ergänzung des die Mörtelfestigkeit mit sich bringenden Bindungsgerüstes.

Nach Anspruch 10 ist die Zugabe eines Dispersionspulvers mit einem Massenanteil von 0,1 bis 1,0 Masse% in die Rezeptur des erfindungsgemäßen Werk-Trockenmörtels vorgesehen. Dieses Dispersionspulver verbessert die Adhäsionshaftung des Mörtels an den der Mörtelfuge zugewandten Oberflächen der Mauersteine. Bei dem Dispersionspulver handelt es sich in der Regel um ein Polymerdispersionspulver.

Durch das nach Anspruch 11 vorgesehene Fließmittel in Form von Casein mit einem Massenanteil von 0,01 bis 0,1 Masse% werden die rheologischen Eigenschaften des Mörtels weiter verbessert. Die Pumpfähigkeit des Mörtels wird also positiv beeinflußt. Zudem wirkt das Casein verzögernd hinsichtlich der Mörtelabbindung.

Die Ansprüche 12 und 13 kennzeichnen bevorzugte Anteilsbereiche für Celluloseether und Luftporenbildner bei eine Auslegung des Leichtmauermörtels als nach Anmachen pumpfähiger Werk- Trockenmörtel.

Die Ansprüche 14 bis 17 beziehen sich auf die Auslegung des Leichtmauermörtels als Werk-Frischmörtel. Bei diesem wird als Bindungskomponente ein latent hydraulisch erhärtender Füller verwendet, bei dem es sich beispielsweise um Bimsmehl vulkanischen Ursprungs, gemahlene Hochofenschlacke oder insbesondere Flugasche handelt.

Durch den nach Anspruch 15 vorgesehenen Abbindeverzögerer wird eine Verarbeitbarkeit des werkseitig hergestellten Mörtels von bis zu 48 Stunden erreicht, so daß genügt Zeit für den Transport des Mörtels an die Baustelle, für dessen Abladung und Umfüllung in bereitgestellte Container und für seine Verarbeitung bleibt.

Anspruch 18 kennzeichnet die Rohdichte des durch Zugabe von Wasser zu der erfindungsgemäßen Mörtelzusammensetzung angemachten Frischmörtels. Dadurch ist die Menge des zuzugebenden Wassers definiert.

Gemäß Anspruch 19 beträgt der Luftgehalt des auf der Basis der erfindungsgemäßen Mörtelrezeptur hergestellten Frischmörtels etwa 25 bis 45 Volumen%.

Nach Anspruch 20 liegt die Rohdichte des abgebundenen Mörtels nach einer Standzeit von 28 Tagen zwischen 0,67 und 0,71 kg/dm³. Damit sind die DIN-Anforderungen an einen Leichtmauermörtel der Klasse LM 21 erfüllt.

Aufgrund des in Anspruch 21 angegebenen Korngrößenbereiches des Schaumglasgranulates von 0,5 mm bis 4,0 mm ist der erfindungsgemäße Leichtmauermörtel als Mittelbettmörtel verwendbar. Dessen Auftragsschichtdicke beträgt 5 bis 6 mm.

Granulat-Teilchen mit einem bevorzugten Korngrößenbereich zwischen 1,0 und 2,0 mm weisen eine besonders hohe Hüllenstabilität auf, so daß ein angemachter Mörtel mit derart spezifizierten Granulatteilchen mit besonders hohen Förderdrücken beaufschlagt - also über große Strecken gepumpt - werden kann.

Im folgenden wird die Erfindung anhand mehrerer Ausführungsbeispiele näher erörtert. Dabei wird auf die der Beschreibung angefügten Tabellen 1 bis 5 Bezug genommen, die folgendes beinhalten:
- Tabelle 1: Überblick über die Anteilsbereiche der einzelnen Rezepturkomponenten für einen Leichtmauermörtel der Klasse LM 21 in Form eines pumpfähigen Mittelbettmörtels bzw. eines Werk-Frischmörtels,
- Tabelle 2: 7 Rezepturen für einen pumpfähigen Mauermörtel der Klasse LM 21 in Gewichtsteilangaben,
- Tabelle 3: 6 Rezepturen für einen Werk-Frischmörtel der Klasse LM 21 in Gewichtsteilangaben, und
- Tabellen 4 und 5: Anwendungsfälle und -eigenschaften der gemäß den Rezepturen nach Tabelle 2 bzw. 3 hergestellten Mörtel.

Die Anteilsbereiche der einzelnen Komponenten und ihre Gewichtsteilangaben in den Tabellen erklären sich zwar prinzipiell von selbst, jedoch ist noch folgendes dazu zu ergänzen:

Bezüglich der Zementkomponente ist festzuhalten, daß für die Festlegung der Bandbreite des Anteilsbereiches von einem unterschiedlichen Qualitätsstandard des Zements ausgegangen wurde. So wurden Zementarten (CEM I 32,5 R/CEM I 42,5 R/CEM I 52,5 R) zugrunde gelegt.

Besonderes Augenmerk verdient der Leichtzuschlag nach DIN 4226, T.2 in Form von hochfestem Blähtongranulat der Firma A/S Fibo, DK-8900 Randers. Dieser Blähton ist aus speziellen Tonarten hergestellt und wird von Kieselglasarten dominiert. Reste von Quarz, Feldspat und Roteisenstein sind enthalten. Seine Schüttdichte beträgt trocken durchschnittlich 410 bis 430 kg/m³, sein Feuchtigkeitsgehalt 5 %. Der Fibo-Blähton weist Rundkörner zwischen 1,0 und 4,0 mm Durchmesser mit einer festen keramischen Oberfläche auf, die der gesamten Granulatstruktur die gewünschte Stabilität verleiht. So weist dieses Blähton-Rundgranulat mit einer Schüttdichte von 410 kg/m³ eine Ghost-Festigkeit nach DIN von 14 kN auf. Zum Vergleich dazu beträgt die Ghost-Festigkeit eines gebrochenen Blähton-Granulates mit einer Korngröße zwischen 0,5 und 3.15 mm und einem Schüttgewicht von 305 kg/m³ lediglich 3,5 kN. Durch die geschilderten physikalischen Eigenschaften des Fibo-Blähtons wird eine Trockenrohdichte des erfindungsgemäßen Leichtmauermörtels von ≤ 0,700 kg/dm³ mit einer Druckfestigkeit von ≥ 7 N/mm² sichergestellt, wobei ein sehr niedriger Anteil von Schaumglasgranulat zum Einsatz gelangen kann.

In der beigefügten Tabelle 2 sind ferner verschiedene Beispiele Nr. 1 bis 7 für die Zusammensetzung eines pumpfähigen Leichtmauermörtels der Klasse LM 21 als Werk-Trockenmörtel angegeben. Hierbei ist zu ergänzen, daß das geblähte Perlit-Granulat - also ein geblähtes Silikat - unter der Handelsbezeichnung "Perlite" von der Firma Perlite Dämmstoff, 44030 Dortmund, DE im Handel erhältlich ist. Das gegebenenfalls der Zusammensetzung beigefügte Blähglimmer-Granulat ist in der Tabelle als 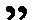 geblähter Glimmer" bezeichnet und unter der Handelsbezeichnung "Vermiculite" von der Firma Deutsche Vermiculite Dämmstoff GmbH, 45549 Sprockhövel, DE im Handel erhältlich. Für den nichtporigen Zuschlag nach DIN 4226, Teil 1 wird vorzugsweise Quarzsand verwendet. Celluloseether wird unter dem Markennamen 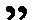 Walocel 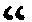 von der Firma Wolff Walsrode AG, 29655 Walsrode, DE vertrieben. Als Dispersionspulver kann ein Vinylacetat-Polymerpulver verwendet werden, das unter der Handelsbezeichnung 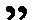 Vinnapas 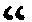 von der Firma Wacker Chemie GmbH, 84480 Burghausen, DE erhältlich ist. Tenside mit luftporeneinführender Wirkung, wie sie als Luftporenbildner für den Mörtel ebenfalls vorgesehen sind, sind von der Firma Hoechst AG, 65174 Wiesbaden, DE beispielsweise unter dem Markennamen 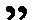 Hostapur 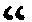 erhältlich.

Die sich auf den Werk-Frischmörtel beziehende Tabelle 3 zeigt deutlich, daß zum einen die als 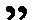 Schmiermittel 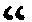 beim pumpfähigen Mörtel verwendete Kalthydrat-Komponente durch einen latent hydraulisch erhärtenden Füller ersetzt wird, bei dem es sich vorzugsweise um Flugasche handelt.

Wie ferner durch einen Vergleich mit Tabelle 2 erkennbar ist, fehlen die auf die Pumpfähigkeit gerichteten Komponenten, wie geblähtes Silikat und Glimmer. Allerdings ist bei dem Werk-Frischmörtel ein üblicher Verzögerer beigemischt, um einen sicheren Transport und ein den praktischen Anforderungen entsprechendes, längerwährendes Verarbeiten des Mörtels an der Baustelle zu ermöglichen. Ferner ist die Konsistenz des Mörtels plastischer und kellengerecht.

Die weiterhin beigefügten Tabellen 4 und 5 spiegeln Anwendungsfälle für verschiedene verarbeitungsfertige Leichtmauermörtel wieder, wie sie auf der Basis der Werk-Trockenmörtel gemäß den Beispielen 1 bis 7 bzw. 6 nach den Tabellen 2 bzw. 3 angemacht wurden. Die verarbeitungsfertigen pumpfähigen Mörtel (Tabelle 4) wurden dabei unter Zugabe von Wasser in einem üblichen Durchlaufmischer hergestellt und mittels einer Schneckenpumpe mit Nachmischer durch Mörtelschläuche mit einem Durchmesser von 35 mm über Förderstrecken zwischen 13 und 26 m gepumpt.

Alternativ dazu kann eine Mischpumpen-Maschine zur Aufbereitung und Förderung des Mörtels zum Einsatz kommen.

Aus den Angaben über die Standfestigkeit des Mörtels ("Konsistenz DIN-Tisch" in Tabelle 2), die Biegezug- und Druckfestigkeiten nach 28 Tagen und die Trockenmörtelrohdichte nach 28 Tagen wird erkennbar, daß die erfindungsgemäßen Leichtmauermörtel den DIN-Anforderungen für die Klasse LM 21 hinsichtlich Wärmedämmfähigkeit und Festigkeit genügen und darüber hinaus in pumpfähigem Zustand eine genügende Standfestigkeit aufweisen, um als Mittelbettmörtel verarbeitet zu werden. Dieser kann direkt durch eine Breitschlitzdüse am Schlauchende auf die vorher gesetzte Mauersteinlage aufgebracht werden.

Die vorstehenden Beispiele beziehen sich auf einen pumpfähigen Mittelbettmörtel und einen Werk-Frischmörtel. Es ist jedoch auch denkbar, im Rahmen der in den Patentansprüchen angegebenen Mörtelzusammensetzungen einen Werktrockenmörtel herzustellen.

**Tabelle 1**

| | Pumpfähiger Mittelbettmörtel LM 21 in M.% | Werk-Frischmörtel LM 21 in M.% |
|---|---|---|
| - Hydraulisch erhärtendes Bindemittel (Zement) | 30 - 75, vorzugsweise 30 - 50 | 30 - 60, vorzugsweise 30 - 50 |
| - Hydraulisches Bindemittel (Kalkhydrat) | 5 - 15 | |
| - Füller, latent hydraulisch erhärtend | | 5 - 15 |
| - Leichtzuschlag/Schaumglasgranulat 0,5-4,0 mm im abgestuften Kornaufbau, vorzugsweise 1,0-4,0 mm | 4 - 20, vorzugsweise 4 - 15 | 4 - 15 |
| - Leichtzuschlag nach DIN 4226, T.2 1,5-6,0 mm, vorzugsw. 2,0-6,0 mm | 2 - 7 | |
| - Blähtongranulat FIBO (Leichtzuschlag nach DIN 4226, T.2) 0,5-4,0 mm, vorzugsw. 1,0-4,0 mm | 5 - 60, vorzugsweise 40 - 60 | 40 - 60 |
| - Zuschlag nach DIN 4226, T.1 0,2-1,5 mm, vorzugsweise 0,2-1,0 mm | 1 - 5 | |
| - geblähtes Silikat (Perlite) | 5 - 20 | |
| - geblähter Glimmer (Vermiculite) | 0,5 - 5 | |
| - Celluloseether | 0,1 - 0,5 | 0,01 - 0,3 |
| - Dispersionspulver | 0,1 - 1 | |
| - Dispergiermittel (Casein) | 0,01 - 0,1 | |
| - Tensid mit luftporeneinführender Wirkung | 0,001 - 0,05 | 0,01 - 1,0 |
| - Verzögerer | | 0,05 - 1,5 |

**Tabelle 2**

| Rezeptur Nr.: | 1 | 2 | 3 | 4 | 5 | 6 | 7 |
|---|---|---|---|---|---|---|---|
| - Hydraulisch erhärtendes Bindemittel (Zement) | 40 | 40 | 40 | 35 | 40 | 45 | 64 |
| - Hydraulisches Bindemittel (Kalkhydrat) | 9 | 9 | 9 | 10 | 10 | 5 | 6 |

| - Leichtzuschlag/Schaumglasgranulat | | | | | | | |
|---|---|---|---|---|---|---|---|
| 1,0 - 2,0 mm im abgestuften Kornaufbau | 5 | 5 | | 5 | 5 | | 15 |
| 1,0 - 4,0 mm im abgestuften Kornaufbau | | | 10 | | | 10 | |
| - Leichtzuschlag nach DIN 4226, T.2 2,0 - 6, 0 mm | 5 | 5 | 5 | 5 | 5 | 5 | 2 |
| - Blähtongranulat FIBO (Leichtzuschlag DIN 4226, T.2) 1,0 - 4,0 mm | 40 | 40 | 35 | 40 | 40 | 35 | 5 |
| - geblähtes Silikat (Perlite) | 5 | 3 | 5 | 5 | 3 | 3 | 9 |
| - geblähter Glimmer (Vermiculite) | | 2 | | | 2 | 2 | |
| - Celluloseether | 0,3 | 0,3 | 0,3 | 0,3 | 0,3 | 0,4 | 0,2 |
| - Dispersionspulver | | 0,25 | 0,30 | 0,1 | 0,25 | 0,30 | 0,2 |
| - Dispergiermittel (Casein) | 0,03 | 0,03 | 0,05 | 0,01 | 0,03 | | 0,02 |
| - Tensid mit luftporeneinführender Wirkung | 0,005 | 0,005 | 0,01 | 0,01 | 0,005 | 0,015 | 0,01 |

**Tabelle 3**

| Rezeptur Nr.: | 1 | 2 | 3 | 4 | 5 | 6 |
|---|---|---|---|---|---|---|
| - Hydraulisch erhärtendes Bindemittel (Zement) | 40 | 40 | 40 | 35 | 40 | 45 |
| - Füller, latent hydraulisch erhärtend | 7 | 7 | 7 | 12 | 7 | 7 |
| - Leichtzuschlag/Schaumglasgranulat 0,5-4,0 mm im abgestuften Kornaufbau vorzugsw. 1,0-4,0 mm | 7 | 7 | 10 | 7 | 7 | 10 |
| - Blähtongranulat FIBO (Leichtzuschlag DIN 4226, T.2) 0,5-4,0 mm vorzugsw. 1,0-4,0 mm | 45 | 45 | 42 | 45 | 45 | 50 |
| - Celluloseether | 0,04 | 0,04 | 0,04 | 0,04 | 0,04 | 0,02 |
| - Tensid mit luftporeneinführender Wirkung | 0,1 | 0,1 | 0,1 | 0,1 | 0,1 | 0,15 |
| - Verzögerer | 0,39 | 0,55 | 0,45 | 0,30 | 0,40 | 0,45 |

**Tabelle 4**

| Herstellung des Mörtels mit Mischpumpenmaschine Förderung des Mörtels mit Schneckenpumpe incl. Nachmischer Mörtelschlauch ⌀ 35 mm, Schlauchlänge 13 und 26 mm | | | | | | | |
|---|---|---|---|---|---|---|---|
| Rezeptur Nr.: | 1 | 2 | 3 | 4 | 5 | 6 | 7 |
| Schlauchlänge (m) | 13 | 13 | 13 | 13 | 26 | 26 | 13 |
| Konsistenz DIN-Tisch (cm) | 12,0 | 12,0 | 12,1 | 12,0 | 13,0 | 14,0 | 14,0 |
| Frischmörtel-Rohdichte (kg/dm³) | 0,90 | 0,88 | 0,86 | 0,90 | 0,87 | 0,88 | 0,95 |
| Luftgehalt (Vol.%) | 38 | 38 | 42 | 38 | 32 | 31 | 31 |
| Druckfestigkeit 28 Tage (N/mm²) | 5,1 | 5,1 | 5,0 | 7,0 | 7,5 | 8,0 | 6,7 |
| Trockenmörtel-Rohdichte (kg/dm³) | 0,70 | 0,69 | 0,68 | 0,70 | 0,67 | 0,68 | 0,68 |

**Tabelle 5**

| Herstellung des Mörtels im Zwangsmischer, Mischzeit 5 min. | | | | | | |
|---|---|---|---|---|---|---|
| Rezeptur Nr.: | 1 | 2 | 3 | 4 | 5 | 6 |
| Frischmörtel-Rohdichte (kg/dm³) | 0,827 | 0,828 | 0,810 | 0,850 | 0,830 | 0,830 |
| Luftgehalt (Vol.%) | 29 | 30 | 32 | 29 | 30 | 32 |
| Druckfestigkeit 28 Tage (N/mm²) | 7,6 | 7,0 | 7,0 | 7,2 | 7,3 | 7,4 |
| Trockenmörtel-Rohdichte (kg/dm³) | 0,70 | 0,71 | 0,70 | 0,70 | 0,69 | 0,69 |

## Patentansprüche

1. Leichtmauermörtel mindestens der Klasse LM 21, insbesondere als Werk- Frischmörtel oder als nach Anmachen pumpfähiger Werk-Trockenmörtel, **gekennzeichnet durch** folgende Mindestzusammensetzung:
- hydraulisch erhärtendes Bindemittel in Form von Zement mit 30 bis 75 Masse%, vorzugsweise 30 bis 50 Masse%,
- eine hydraulische oder latent hydraulisch erhärtende Bindungskomponente mit 5 bis 15 Masse%,
- Leichtzuschlagstoff in Form von Blähton-Rundgranulat mit 5 bis 60 Masse%, vorzugsweise 40 bis 60 Masse%,
- Leichtzuschlagstoff in Form von Schaumglasgranulat mit 4 bis 20 Masse%, vorzugsweise bis 15 Masse%,
- Celluloseether mit 0,01 bis 0,5 Masse%, und
- Luftporenbildner mit 0,001 bis 1,0 Masse%.

2. Leichtmauermörtel nach Anspruch 1, **dadurch gekennzeichnet, daß** die Korngröße des Leichtzuschlagstoffes in Form von Blähton-Rundgranulat zwischen 0,5 und 4,0 mm, vorzugsweise zwischen 1,0 und 4,0 mm liegt, wobei die Granulatpartikel eine intakte, feste Kornschale aufweisen.

3. Leichtmauermörtel nach Anspruch 1 oder 2, **dadurch gekennzeichnet, daß** er als nach Anmachen pumpfähiger Werk-Trockenmörtel ein hydraulisches Bindemittel in Form von Kalkhydrat als Bindungskomponente enthält.

4. Leichtmauermörtel nach Anspruch 3, **gekennzeichnet durch** ein geblähtes Perlit-Granulat mit einem Masseanteil von 5 bis 20 Masse% als weiteren Bestandteil.

5. Leichtmauermörtel nach Anspruch 3 oder 4, **gekennzeichnet durch** ein Blähglimmer-Granulat mit einem Massenanteil von 0,5 bis 5,0 Masse% als weiteren Bestandteil.

6. Leichtmauermörtel nach einem der Ansprüche 3 bis 5, **gekennzeichnet durch** einen porigen Zuschlag nach DIN 4226, Teil 2 mit einem Massenanteil von 2,0 bis 7,0 Masse%, vorzugsweise bis etwa 5 Masse% als weiteren Bestandteil.

7. Leichtmauermörtel nach Anspruch 6, **dadurch gekennzeichnet, daß** der Zuschlag eine Korngröße von 1,5 mm bis 6,0 mm, vorzugsweise von 2,0 mm bis 6,0 mm aufweist.

8. Leichtmauermörtel nach einem der Ansprüche 3 bis 6, **gekennzeichnet durch** einen nicht-porigen Zuschlag nach DIN 4226, Teil 1 mit einem Massenanteil von 1,0 bis 5,0 Masse%, vorzugsweise bis etwa 3 Masse% als weiteren Bestandteil.

9. Leichtmauermörtel nach Anspruch 8, **dadurch gekennzeichnet, daß** der Zuschlag eine Korngröße von 0,2 mm bis 1,5 mm, vorzugsweise von 0,2 bis 1,0 mm aufweist.

10. Leichtmauermörtel nach einem der Ansprüche 3 bis 9, **gekennzeichnet durch** ein Dispersionspulver mit einem Massenanteil von 0,1 bis 1,0 Masse% als weiteren Bestandteil.

11. Leichtmauermörtel nach einem der Ansprüche 3 bis 10, **gekennzeichnet durch** ein Fließmittel in Form von Casein mit einem Massenanteil von 0,01 bis 0,1 Masse% als weiteren Bestandteil.

12. Leichtmauermörtel nach einem der Ansprüche 3 bis 11, **dadurch gekennzeichnet, daß** der Anteil des Celluloseethers zwischen 0,1 und 0,5 Masse% liegt.

13. Leichtmauermörtel nach einem der Ansprüche 3 bis 12, **dadurch gekennzeichnet, daß** der Anteil des Luftporenbildners zwischen 0,001 und 0,05 Masse% liegt.

14. Leichtmauermörtel nach Anspruch 1 oder 2, **dadurch gekennzeichnet, daß** er als Werk-Frischmörtel einen latent hydraulisch erhärtenden Füller als Bindungskomponente enthält.

15. Leichtmauermörtel nach Anspruch 14, **gekennzeichnet durch** einen Abbindeverzögerer mit einem Anteil von 0,05 bis 1,5 Masse%.

16. Leichtmauermörtel nach Anspruch 14 oder 15, **dadurch gekennzeichnet, daß** der Anteil an Celluloseether zwischen 0,01 und 0,3 Masse% liegt.

17. Leichtmauermörtel nach einem der Ansprüche 14 bis 16, **dadurch gekennzeichnet, daß** der Anteil des Luftporenbildners zwischen 0,01 und 1,0 Masse% liegt.

18. Leichtmauermörtel nach einem der Ansprüche 1 bis 17, **dadurch gekennzeichnet, daß** der Leichtmauermörtel durch Zugabe von Wasser im verarbeitungsfähigen Zustand eine Frischmörtel-Rohdichte zwischen 0,80 und 0,95 kg/dm³ aufweist.

19. Leichtmauermörtel nach einem der Ansprüche 1 bis 18, **dadurch gekennzeichnet, daß** der Luftgehalt des aus dem Leichtmauermörtel hergestellten Frischmörtels zwischen etwa 25 und 45 Volumen% beträgt.

20. Leichtmauermörtel nach einem der Ansprüche 1 bis 19, **dadurch gekennzeichnet, daß** die Rohdichte des abgebundenen Mörtels nach einer Standzeit von 28 Tagen zwischen 0,67 und 0,71 kg/dm³ liegt.

21. Leichtmauermörtel nach einem der Ansprüche 1 bis 20, **dadurch gekennzeichnet, daß** die Korngröße der Leichtzuschlagstoffes in Form von Schaumglasgranulat zwischen 0,5 und 4,0 mm, vorzugsweise zwischen 1,0 und 4,0 mm liegt.
